(19) **Europäisches Patentamt / European Patent Office / Office européen des brevets**

(11) **EP 1 230 182 B1**

(12) **FASCICULE DE BREVET EUROPEEN**

(45) Date de publication et mention
de la délivrance du brevet:
**13.08.2008 Bulletin 2008/33**

(51) Int Cl.:
*C03C 4/02* *(2006.01)*  *C03C 3/087* *(2006.01)*
*C03C 4/08* *(2006.01)*

(21) Numéro de dépôt: **00972683.7**

(22) Date de dépôt: **04.10.2000**

(86) Numéro de dépôt international:
**PCT/EP2000/009756**

(87) Numéro de publication internationale:
**WO 2001/025160 (12.04.2001 Gazette 2001/15)**

(54) **VERRE COLORE SODO-CALCIQUE**

GEFÄRBTES KALKNATRONGLAS

COLOURED SODA-LIME GLASS

(84) Etats contractants désignés:
**AT BE CH CY DE DK ES FI FR GB GR IE IT LI LU MC NL PT SE**

(30) Priorité: **06.10.1999 PCT/EP99/07467**

(43) Date de publication de la demande:
**14.08.2002 Bulletin 2002/33**

(73) Titulaire: **AGC Flat Glass Europe SA**
**1170 Bruxelles (BE)**

(72) Inventeurs:
• **COSTER, Dominique**
**B-5020 Temploux (BE)**
• **DELMOTTE, Laurent**
**B-4219 Meeffe (BE)**

• **FOGUENNE, Marc**
**B-5081 Saint-Denis (BE)**

(74) Mandataire: **Decamps, Alain René François et al**
**AGC Flat Glass Europe SA**
**Intellectual Property Department**
**R&D Centre**
**Rue de l'Aurore, 2**
**6040 Jumet (BE)**

(56) Documents cités:
| | |
|---|---|
| EP-A- 0 820 964 | WO-A-97/30948 |
| WO-A-99/05069 | WO-A-99/58462 |
| FR-A- 2 738 240 | JP-A- 8 245 238 |
| US-A- 4 866 010 | |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un verre coloré sodo-calcique, comprenant des constituants principaux formateurs de verre et d'agents colorants.

L'expression "verre sodo-calcique" est utilisée ici dans le sens large et concerne tout verre qui contient les constituants suivants dont la quantité est exprimée en pourcentage par rapport au poids total de verre:

| | |
|---|---|
| $Na_2O$ | 10 à 20 % |
| CaO | 0 à 16 % |
| $SiO_2$ | 60 à 75 % |
| $K_2O$ | 0 à 10 % |
| MgO | 0 à 10 % |
| $Al_2O_3$ | 0 à 5 % |
| BaO | 0 à 2 % |
| BaO + CaO + MgO | 10 à 20 % |
| $K_2O + Na_2O$ | 10 à 20 % |

Ce type de verre trouve, par exemple, un très large usage dans le domaine des vitrages pour le bâtiment ou l'automobile. On le fabrique couramment sous forme de ruban par le procédé de flottage. Un tel ruban peut être découpé en feuilles qui peuvent ensuite être bombées ou subir un traitement de renforcement de leurs propriétés mécaniques, par exemple une trempe thermique.

Il est en général nécessaire de rapporter les propriétés optiques d'une feuille de verre à un illuminant standard. Dans la présente description, on utilise 2 illuminants standards, l'illuminant C et l'illuminant A définis par la Commission Internationale de l'Eclairage (C.I.E.). L'illuminant C représente la lumière du jour moyenne ayant une température de couleur de 6700 K. Cet illuminant est surtout utile pour évaluer les propriétés optiques des vitrages destinés au bâtiment ainsi que la couleur de ceux des véhicules automobiles. L'illuminant A représente le rayonnement d'un radiateur de Planck à une température d'environ 2856 K. Cet illuminant représente la lumière émise par des phares de voiture et est essentiellement destiné à évaluer les propriétés optiques des vitrages destinés à l'automobile. La Commission Internationale de l'Eclairage a également publié un document intitulé "Colorimétrie, Recommandations Officielles de la C.I.E." (mai 1970) qui décrit une théorie selon laquelle les coordonnées colorimétriques pour la lumière de chaque longueur d'onde du spectre visible sont définies de manière à pouvoir être représentées sur un diagramme ayant des axes orthogonaux x et y, appelé diagramme trichromatique C.I.E. 1931. Ce diagramme trichromatique montre le lieu représentatif de la lumière de chaque longueur d'onde (exprimée en nanomètres) du spectre visible. Ce lieu est appelé "spectrum locus" et la lumière dont les coordonnées se placent sur ce spectrum locus est dite posséder 100 % de pureté d'excitation pour la longueur d'onde appropriée. Le spectrum locus est fermé par une ligne appelée ligne des pourpres qui joint les points du spectrum locus dont les coordonnées correspondent aux longueurs d'onde 380 nm (violet) et 780 nm (rouge). La surface comprise entre le spectrum locus et la ligne des pourpres est celle disponible pour les coordonnées trichromatiques de toute lumière visible. Les coordonnées de la lumière émise par l'illuminant C par exemple, correspondent à x = 0,3101 et y = 0,3162. Ce point C est considéré comme représentant de la lumière blanche et de ce fait a une pureté d'excitation égale à zéro pour toute longueur d'onde. Des lignes peuvent être tirées depuis le point C vers le spectrum locus à toute longueur d'onde désirée et tout point situé sur ces lignes peut être défini non seulement par ses coordonnées x et y, mais aussi en fonction de la longueur d'onde correspondant à la ligne sur laquelle il se trouve et de sa distance depuis le point C rapportée à la longueur totale de la ligne de longueur d'onde. Dès lors, la teinte de la lumière transmise par une feuille de verre coloré peut être décrite par sa longueur d'onde dominante et sa pureté d'excitation exprimée en pour-cent.

Les coordonnées C.I.E. de lumière transmise par une feuille de verre coloré dépendront non seulement de la composition du verre mais aussi de son épaisseur. Dans la présente description, ainsi que dans les revendications, toutes les valeurs de la pureté d'excitation P et de la longueur d'onde dominante $\lambda_D$ de la lumière transmise sont calculées à partir des transmissions spécifiques internes spectrales ($TSI_\lambda$) d'une feuille de verre de 5 mm d'épaisseur avec l'illuminant C sous un angle d'observation solide de 2°. La transmission spécifique interne spectrale d'une feuille de verre est régie uniquement par l'absorption du verre et peut être exprimée par la loi de Beer-Lambert:

$TSI_\lambda = e^{-E.A_\lambda}$ où $A_\lambda$ est le coefficient d'absorption du verre (en $cm^{-1}$) à la longueur d'onde considérée et E l'épaisseur du verre (en cm). En première approximation, $TSI_\lambda$ peut également être représentée par la formule

$$(I_3 + R_2) / (I_1 - R_1)$$

où $I_1$ est l'intensité de la lumière visible incidente à une première face de la feuille de verre, $R_1$ est l'intensité de la lumière visible réfléchie par cette face, $I_3$ est l'intensité de la lumière visible transmise à partir de la seconde face de la feuille de verre et $R_2$ est l'intensité de la lumière visible réfléchie vers l'intérieur de la feuille par cette seconde face.

L'indice de rendu d'une couleur (R), exprimé par un nombre compris entre 1 et 100, traduit l'écart entre une couleur et la perception qu'en a un observateur lorsqu'il la regarde à travers un écran transparent coloré. Plus cet écart est important, plus l'indice de rendu de la couleur en question sera faible. Pour une longueur d'onde $\lambda_D$ constante, lorsque la pureté de couleur du verre augmente, l'indice de rendu d'une couleur perçue au travers de ce verre diminue. L'indice de rendu de couleur est calculé selon la norme EN410. Nous nous référerons ci-après à l'indice de rendu de la couleur jaune (Rj) d'un verre qui traduit les distorsions de cette couleur par rapport à la couleur qui est perçue par un observateur regardant à travers ce verre.

Dans la description qui suit ainsi que dans les revendications, on utilise encore:

- la transmission lumineuse totale pour l'illuminant A (TLA), mesurée pour une épaisseur de 4 mm (TLA4) sous un angle d'observation solide de 2°. Cette transmission totale est le résultat de l'intégration entre les longueurs d'onde de 380 et 780 nm de l'expression: $\Sigma T_\lambda . E_\lambda . S_\lambda / \Sigma E_\lambda . S_\lambda$ dans laquelle $T_\lambda$ est la transmission à la longueur d'onde $\lambda$, $E_\lambda$ est la distribution spectrale de l'illuminant A et $S_\lambda$ est la sensibilité de l'oeil humain normal en fonction de la longueur d'onde $\lambda$.
- la transmission énergétique totale (TE), mesurée pour une épaisseur de 4 mm (TE4). Cette transmission totale est le résultat de l'intégration entre les longueurs d'onde 300 et 2500 nm de l'expression: $\Sigma T_\lambda . E_\lambda / \Sigma E_\lambda$. La distribution énergétique $E_\lambda$ est la distribution énergétique spectrale du soleil à 30° au-dessus de l'horizon, avec une masse d'air égale à 2 et une inclinaison du vitrage de 60° par rapport à l'horizontale. Cette distribution, appelée "distribution de Moon", est définie dans la norme ISO 9050.
- la sélectivité (SE), mesurée par le rapport de la transmission lumineuse totale pour l'illuminant A et de la transmission énergétique totale (TLA/TE).
- la transmission totale dans l'ultraviolet, mesurée pour une épaisseur de 4 mm (TUV4). Cette transmission totale est le résultat de l'intégration entre 280 et 380 nm de l'expression: $\Sigma T_\lambda . U_\lambda / \Sigma U_\lambda$. dans laquelle $U_\lambda$ est la distribution spectrale du rayonnement ultraviolet ayant traversé l'atmosphère, déterminée dans la norme DIN 67507.
- Le rapport $Fe^{2+}$/Fe total, parfois appelé rapport rédox, qui représente la valeur du rapport en poids d'atome de $Fe^{2+}$ par rapport au poids total des atomes de fer présents dans le verre et qui s'obtient par la formule:

$$Fe_{2+}/Fe_{total} = [24.4495 \times \log (92/\tau_{1050})] / t_{Fe2O3}$$

où $\tau_{1050}$ représente la transmission spécifique interne du verre de 5 mm à la longueur d'onde de 1050 nm. $t_{Fe2O3}$ représente la teneur totale en fer exprimée sous forme d'oxyde $Fe_2O_3$ et mesurée par fluorescence X.

La présente invention concerne en particulier des verres bleus. Ces verres peuvent être utilisés dans des applications architecturales ainsi que comme vitrages de wagons de chemin de fer et véhicules automobiles. En application architecturale, des feuilles de verre de 4 à 6 mm d'épaisseur seront généralement utilisées alors que dans le domaine automobile des épaisseurs de 1 à 5 mm sont couramment employées, en particulier pour la réalisation de vitrages latéraux et de toits ouvrants.

L'invention consiste en un verre coloré sodo-calcique comprenant des constituants principaux formateurs de verre et des agents colorants, caractérisé en ce qu'il comprend :

i) une quantité de MgO, exprimée par rapport au poids total de verre, qui est supérieure à 2%,

ii) une quantité de $MnO_2$, exprimée par rapport au poids total de verre, qui est inférieure à 1300 parts par million,

iii) une quantité de $Fe_2O_3$, exprimée par rapport au poids total de verre, qui est supérieure à 0,5% et inférieure à 1.1%, la quantité totale de fer étant exprimée sous forme de $Fe_2O_3$,

iv) une quantité de fer ferreux, exprimée en poids d'atomes de $Fe^{2+}$ par rapport au poids total des atomes de fer présents dans le verre, supérieure à 28% (rapport $Fe^{2+}$/Fe total),

v) une quantité de Co, exprimée par rapport au poids total de verre, qui est supérieure à 60 parts par million,

vi) une quantité de $TiO_2$, exprimée par rapport au poids total de verre, inférieure à 0,1%,

et en ce qu'il présente :

vii) une sélectivité (SE4) supérieure à 1.2,

viii) une longueur d'onde dominante ($\lambda_D$) inférieure ou égale à 490 nm, et
ix) une pureté d'excitation supérieure à 10%.

Cette combinaison de compositions et de propriétés est avantageuse en ce qu'elle permet d'offrir une couleur particulièrement esthétique tout en assurant une sélectivité élevée qui permet de limiter l'échauffement intérieur des volumes délimités par des vitrages selon l'invention.

Il est souhaitable que les composants principaux formateurs du verre selon l'invention comprennent une concentration en MgO de plus de 2 % en poids par rapport au poids total de verre, car ce composé favorise la fusion de ses constituants lors de l'élaboration du verre.

Les propriétés énergétiques et optiques d'un verre contenant plusieurs agents colorants résultent d'une interaction complexe entre ceux-ci. En effet, ces agents colorants ont un comportement qui dépend fortement de leur état d'oxydation et donc de la présence d'autres éléments susceptibles d'influencer cet état.

Du fer est présent dans la plupart des verres existant sur le marché, en particulier dans les verres colorés. La présence de $Fe^{3+}$ confère au verre une légère absorption de la lumière visible de faible longueur d'onde (410 et 440 nm) et une très forte bande d'absorption dans l'ultraviolet (bande d'absorption centrée sur 380 nm), tandis que la présence d'ions $Fe^{2+}$ provoque une forte absorption dans l'infrarouge (bande d'absorption centrée sur 1050 nm). La présence de $Fe^{3+}$ procure au verre une légère coloration jaune, généralement jugée peu agréable, tandis que les ions ferreux $Fe^{2+}$ donnent une coloration bleu vert prononcée. Une forte concentration en $Fe^{2+}$ dans le verre permet donc de diminuer la transmission énergétique TE et de procurer une coloration agréable. Toutefois, la présence de fer dans le bain de verre en fusion provoque une absorption du rayonnement infrarouge qui peut faire obstacle à la diffusion de chaleur dans le four de fabrication du verre et donc rendre cette fabrication plus difficile. De plus quand la concentration en fer augmente, la transmission lumineuse du verre diminue.

Le verre selon l'invention contient moins de 1.1% de $Fe_2O_3$ par rapport au poids total de verre, de préférence moins de 1.0%. Cette teneur en fer permet la fabrication du verre selon l'invention dans un four traditionnel à grande capacité.

Le verre selon l'invention comprend aussi plus de 0.5% en poids de $Fe_2O_3$ (fer total), de préférence plus de 0.6%, préférablement plus de 0.7% en poids de $Fe_2O_3$. De telles teneurs permettent d'obtenir une sélectivité élevée du verre (SE4 supérieure à 1,2).

Le verre selon l'invention possède aussi du fer ferreux en une quantité qui, exprimée en poids d'atomes de $Fe^{2+}$ par rapport au poids total des atomes de fer présents dans le verre, est supérieure à 28% (rapport $Fe^{2+}$/Fe total), de préférence supérieure à 32%, préférablement supérieure à 35%. Ce rapport permet d'obtenir un verre avec une faible TE et une grande sélectivité.

Le verre selon l'invention contient moins de 1300 parts par million (ppm) de $MnO_2$ par rapport au poids total de verre. Le caractère oxydant du $MnO_2$ peut influencer l'état rédox du fer, diminuer la sélectivité du verre ainsi qu'induire une nuance violette.

Le verre selon l'invention contient plus de 60 parts par million de Co par rapport au poids total de verre et, de préférence plus de 70 parts par million de Co. Plus la teneur en Co est élevée plus la couleur bleue du verre est accentuée.

Dans des formes préférées, le verre selon l'invention offre un indice de rendu de la couleur jaune (Rj) supérieur à 98.5 - 0.74 x P, de préférence supérieur à 101 - 0.74 x P, préférablement supérieur à 104 - 0.74 x P. Ces rapports traduisent, pour une pureté donnée du verre, de très faibles distorsions de

la couleur jaune telle qu'elle est perçue par un observateur à travers une feuille du verre selon l'invention.

L'oeil humain étant particulièrement sensible à la couleur jaune, une valeur élevée de l'indice de rendu de cette couleur traduit le fait qu'un observateur aura une perception particulièrement naturelle de son environnement vu à travers une feuille du verre selon l'invention.

De préférence également, le verre selon l'invention présente une TUV4 inférieure à 30%. Une telle valeur permet d'éviter une décoloration importante des objets situés dans un volume délimité par une surface vitrée comprenant le verre selon l'invention. Cette propriété est particulièrement avantageuse dans le secteur automobile. Une faible transmission du rayonnement ultraviolet permet en effet d'éviter le vieillissement et la décoloration des garnitures intérieures des véhicules exposées à l'action du soleil.

Il est souhaitable que le verre selon l'invention présente une TLA4 inférieure à 70%, de préférence inférieure à 65%, préférablement inférieure à 60°% ce qui le rend particulièrement approprié aux applications telles que la réalisation de lunettes arrières, de vitrages latéraux arrières et de toits vitrés pour automobile.

Dans des formes préférées de l'invention, le verre possède une sélectivité supérieure à 1.3, de préférence supérieure à 1.4, préférablement supérieure à 1.5.

Ceci est particulièrement avantageux en termes de limitation de l'échauffement des volumes délimités par des vitrages réalisés avec le verre selon l'invention.

De préférence, le verre selon l'invention possède une longueur d'onde dominante ($\lambda_D$) et une pureté d'excitation (P) qui se situent dans un diagramme trichromatique CIE 1931 à l'intérieur d'un triangle dont les sommets sont le point représentant la source d'illuminant C et les points dont les coordonnées ($\lambda_D$, P) sont respectivement (490, 19) et (476, 49), de préférence (490,19) et (480,38). Ceci correspond à des colorations considérées comme particulièrement esthétiques.

Avantageusement, le verre selon l'invention possède une longueur d'onde dominante ($\lambda_D$) et une pureté d'excitation (P) qui se situent dans un diagramme trichromatique CIE 1931 à l'intérieur d'un trapèze dont les sommets sont les points dont les coordonnées ($\lambda_D$, P) sont respectivement (480, 10), (480,38), (490, 19) et (490, 10), de préférence (480, 15), (480,38), (490,19) et (490, 15).

Le verre selon l'invention possède de préférence une longueur d'onde dominante inférieure ou égale à 489 nm.

Le verre selon l'invention peut présenter une pureté d'excitation supérieure à 10%, de préférence supérieure à 15%, préférablement supérieure à 20%, ce qui correspond à des teintes particulièrement appréciées.

Un verre coloré selon l'invention peut comprendre les agents colorants suivants, leur quantité étant exprimée en pourcentage par rapport au poids total de verre et la quantité totale de fer étant exprimée sous forme de $Fe_2O_3$ :

| | |
|---|---|
| $Fe_2O_3$ | supérieure ou égale à 0.6% et inférieure à 1.1 % |
| FeO | de 0.15 à 0.35 % |
| Co | de 0.0060 à 0.0120 % |

Le verre coloré possédant cette composition d'agents colorants présente les propriétés optiques suivantes:

$$35\ \% < TLA4 < 60\ \%$$

$$15\ \% < TE4 < 40\ \%$$

$$TUV4 < 25\ \%$$

$$481\ nm < \lambda_D \leq 490\ nm$$

$$10\% < P < 25\ \%$$

La gamme de transmission lumineuse ainsi définie rend le verre selon l'invention particulièrement utile pour éviter l'éblouissement par la lumière des phares d'automobiles lorsqu'il est utilisé pour des vitrages latéraux arrières ou comme lunette arrière de véhicules. La gamme de transmission énergétique correspondante apporte au verre sa haute sélectivité.

Selon une variante préférée de l'invention, le verre peut comprendre les agents colorants suivants, leur quantité étant exprimée en pourcentage par rapport au poids total de verre et la quantité totale de fer étant exprimée sous forme de $Fe_2O_3$ :

| | |
|---|---|
| $Fe_2O_3$ | supérieure ou égale à 0.9 % et inférieure à 1.1 % |
| FeO | de 0.25 à 0.33 % |
| Co | de 0.0060 à 0.0100 % |

Selon une autre variante préférée de l'invention, le verre peut comprendre les agents colorants suivants, leur quantité étant exprimée en pourcentage par rapport au poids total de verre et la quantité totale de fer étant exprimée sous forme de $Fe_2O_3$ :

| | |
|---|---|
| $Fe_2O_3$ | de 0.6 à 0.9 % |
| FeO | de 0.18 à 0.35 % |
| Co | de 0.0080 à 0.0130 % |

Le verre coloré possédant ces compositions d'agents colorants présente les propriétés optiques suivantes :

$$35\ \% < TLA4 < 55\ \%$$

$$20\ \% < TE4 < 42\ \%$$

$$TUV4 < 30\%$$

$$479\ nm < \lambda_D < 488\ nm$$

$$15\% < P < 35\ \%$$

Le verre selon l'invention peut être revêtu d'une couche d'oxydes métalliques réduisant son échauffement par le rayonnement solaire et par conséquent celui de l'habitacle d'un véhicule utilisant un tel verre comme vitrage.

Les verres selon la présente invention peuvent être fabriqués par des procédés traditionnels. En tant que matières premières, on peut utiliser des matières naturelles, du verre recyclé, des scories ou une combinaison de ces matières. Les agents colorants ne sont pas nécessairement ajoutés dans la forme indiquée, mais cette manière de donner les quantités d'agents colorants ajoutées, répond à la pratique courante. En pratique, le fer est ajouté sous forme de potée et le cobalt sous forme de sulfate hydraté, tel que $CoSO_4.7H_2O$ ou $CoSO_4.6H_2O$

D'autres éléments sont parfois présents en tant qu'impuretés dans les matières premières utilisées pour fabriquer le verre selon l'invention que ce soit dans les matières naturelles, dans le verre recyclé ou dans les scories, mais lorsque ces impuretés ne confèrent pas au verre des propriétés se situant hors des limites définies ci-dessus, ces verres sont considérés comme conformes à la présente invention.

Le verre selon l'invention contient aussi moins de 0.1% de titane exprimé en poids de $TiO_2$ par rapport au poids total de verre. Une quantité trop élevée de $TiO_2$ risque de conférer au verre une coloration jaune qui n'est pas souhaitée. Par contre, la présence de $TiO_2$ a pour avantage de permettre une diminution de la TUV.

La présente invention sera illustrée par les exemples spécifiques qui suivent.

**EXEMPLES 1 à 49**

Le tableau 1 donne à titre indicatif et non limitatif la composition de base du verre. Le tableau II donne à titre indicatif et non limitatif les propriétés optiques et les proportions en poids des agents colorants d'un verre selon l'invention par rapport au poids total de ce verre. Ces proportions sont déterminées par fluorescence X du verre et converties en l'espèce moléculaire indiquée. La teneur en $MnO_2$ des exemples 23 à 49 est comprise entre 150 et 250 parts par million par rapport au poids total de verre.

Le mélange vitrifiable peut, si nécessaire, contenir un agent réducteur tel que du coke, du graphite ou du laitier ou un agent oxydant tel que du nitrate. Dans ce cas, les proportions des autres matériaux sont adaptées afin que la composition du verre demeure inchangée.

**TABLEAU 1**

| ANALYSE VERRE DE BASE | |
|---|---|
| $SiO_2$ | 71.5-71.9% |
| $Al_2O_3$ | 0.8% |
| CaO | 8.8% |
| MgO | 4.2% |
| $Na_2O$ | 14.1% |
| $K_2O$ | 0.1% |
| $SO_3$ | 0.05-0.45% |

**TABLEAU II**

| N° ex. | Fe2O3 (%) | FeO (%) | Fe$^{2+}$/Fe (Tot) (%) | Co (ppm) | MnO2 (ppm) | TLA4 (%) | TE4 (%) | TUV4 (%) | SE4 | $\lambda_D$ (nm) | P (%) | Rj |
|---|---|---|---|---|---|---|---|---|---|---|---|---|
| 1 | 1.01 | 0.27 | 39 | 64 | 80 | 49.6 | 32.1 | 12.3 | 1.55 | 486 | 17.6 | 93.7 |
| 2 | 1.00 | 0.29 | 32 | 64 | 100 | 48.2 | 30.3 | 12.0 | 1.59 | 486 | 18.6 | 93.3 |
| 3 | 1.04 | 0.33 | 35 | 62 | 90 | 46.9 | 28.2 | 12.6 | 1.66 | 486 | 20.0 | 92.8 |
| 4 | 1.03 | 0.39 | 42 | 65 | 80 | 44.7 | 25.7 | 14.2 | 1.74 | 485 | 23.2 | 91.9 |
| 5 | 0.99 | 0.47 | 53 | 100 | 50 | 36.1 | 21.6 | 16.4 | 1.68 | 482 | 34.2 | 90.7 |
| 6 | 1.02 | 0.39 | 42 | 71 | 40 | 43.8 | 25.7 | 14.4 | 1.71 | 484 | 24.5 | 91.9 |
| 7 | 1.01 | 0.49 | 54 | 70 | 70 | 41.0 | 22.8 | 17.0 | 1.80 | 484 | 29.1 | 90.4 |
| 8 | 1.02 | 0.36 | 39 | 109 | 60 | 38.1 | 24.7 | 13.1 | 1.55 | 482 | 29.7 | 92.3 |
| 9 | 1.02 | 0.46 | 50 | 69 | 110 | 44.7 | 26.1 | 12.9 | 1.71 | 485 | 22.5 | 91.1 |
| 10 | 0.90 | 0.22 | 27 | 58 | 60 | 52.8 | 36.9 | 16.6 | 1.43 | 485 | 15.5 | |
| 11 | 0.89 | 0.23 | 29 | 62 | 80 | 51.7 | 36.6 | 17.0 | 1.41 | 485 | 16.5 | |
| 12 | 0.85 | 0.27 | 35 | 65 | 70 | 49.7 | 33.5 | 19.2 | 1.48 | 484 | 20.3 | |
| 13 | 0.91 | 0.31 | 38 | 71 | 60 | 45.6 | 28.9 | 16.9 | 1.58 | 484 | 22.4 | |
| 14 | 0.95 | 0.30 | 35 | 63 | 90 | 47.8 | 29.7 | 15.2 | 1.61 | 485 | 20.2 | |
| 15 | 0.98 | 0.31 | 35 | 58 | 60 | 48.4 | 28.9 | 14.0 | 1.67 | 486 | 19.3 | |
| 16 | 0.61 | 0.23 | 42 | 60 | 50 | 54.3 | 37.9 | 26.6 | 1.43 | 483 | 20.2 | |
| 17 | 0.65 | 0.25 | 43 | 62 | 80 | 52.5 | 35.7 | 25.0 | 1.47 | 484 | 20.9 | |
| 18 | 0.67 | 0.25 | 41 | 60 | 70 | 53.3 | 36.4 | 24.1 | 1.46 | 484 | 20.0 | |
| 19 | 0.72 | 0.28 | 43 | 62 | 60 | 50.6 | 32.6 | 22.2 | 1.55 | 484 | 21.3 | |
| 20 | 0.74 | 0.27 | 40.5 | 61 | 90 | 51.2 | 33.5 | 21.3 | 1.53 | 484 | 20.5 | |
| 21 | 0.78 | 0.27 | 38 | 70 | 100 | 48.3 | 32.4 | 19.6 | 1.49 | 484 | 21.9 | |
| 22 | 0.81 | 0.35 | 48 | 65 | 80 | 45.8 | 25.6 | 18.9 | 1.79 | 484 | 23.6 | |
| 23 | 0.78 | 0.31 | 44 | 115 | | 41.9 | 28.3 | 22.1 | 1.48 | 480.6 | 31.0 | |
| 24 | 0.8 | 0.29 | 40 | 100 | | 45.1 | 30.9 | 20.9 | 1.46 | 481.5 | 26.8 | |
| 25 | 0.825 | 0.26 | 35 | 80 | | 49.4 | 34.2 | 19.3 | 1.45 | 483.1 | 21.4 | |
| 26 | 0.85 | 0.23 | 30 | 75 | | 51.2 | 36.5 | 17.8 | 1.40 | 483.8 | 18.7 | |
| 27 | 0.875 | 0.24 | 30 | 65 | | 52.4 | 36.4 | 17.0 | 1.44 | 485.0 | 16.9 | |
| 28 | 0.85 | 0.27 | 35 | 130 | | 40.5 | 30.3 | 19.2 | 1.34 | 480.2 | 30.6 | |
| 29 | 0.825 | 0.33 | 45 | 90 | | 45.0 | 28.1 | 20.8 | 1.60 | 482.2 | 26.7 | |
| 30 | 0.79 | 0.32 | 45 | 130 | | 38.9 | 26.6 | 22.2 | 1.46 | 480.1 | 34.2 | |
| 31 | 0.83 | 0.34 | 46 | 87 | | 45.1 | 27.6 | 20.7 | 1.63 | 482.5 | 26.5 | |
| 32 | 0.71 | 0.22 | 35 | 80 | | 51.7 | 37.4 | 22.4 | 1.38 | 482.5 | 21.5 | |
| 33 | 0.69 | 0.28 | 45 | 130 | | 40.8 | 29.4 | 24.9 | 1.39 | 479.5 | 34.3 | |
| 34 | 0.75 | 0.27 | 40 | 100 | | 46.1 | 32.3 | 22.2 | 1.43 | 481.2 | 26.9 | |
| 35 | 0.65 | 0.23 | 39 | 89 | | 50.2 | 36.4 | 24.7 | 1.38 | 481.1 | 24.6 | |
| 36 | 0.61 | 0.21 | 38 | 82 | | 52.4 | 38.5 | 25.5 | 1.36 | 481.3 | 23.0 | |
| 37 | 0.75 | 0.29 | 43 | 98 | | 45.5 | 30.7 | 22.5 | 1.48 | 481.3 | 27.6 | |
| 38 | 0.73 | 0.26 | 39 | 126 | | 42.4 | 31.8 | 22.9 | 1.33 | 479.7 | 31.4 | |
| 39 | 0.76 | 0.29 | 42 | 114 | | 43.0 | 30.1 | 22.4 | 1.43 | 480.5 | 30.2 | |
| 40 | 0.64 | 0.22 | 39 | 86 | | 50.9 | 36.9 | 24.9 | 1.38 | 481.2 | 24.1 | |
| 41 | 0.63 | 0.20 | 35 | 80 | | 53.2 | 39.7 | 24.5 | 1.34 | 481.5 | 21.6 | |
| 42 | 0.65 | 0.18 | 31 | 85 | | 53.1 | 41.0 | 23.5 | 1.30 | 481.4 | 21.1 | |
| 43 | 0.69 | 0.21 | 34 | 90 | | 50.6 | 37.9 | 22.9 | 1.34 | 481.3 | 23.0 | |
| 44 | 0.73 | 0.23 | 35 | 92 | | 49.2 | 36.1 | 22.0 | 1.36 | 481.5 | 23.7 | |
| 45 | 0.76 | 0.225 | 33 | 94 | | 48.9 | 36.2 | 20.9 | 1.35 | 481.6 | 23.3 | |
| 46 | 0.79 | 0.27 | 38 | 92 | | 47.2 | 32.8 | 20.8 | 1.44 | 481.9 | 24.7 | |
| 47 | 0.83 | 0.26 | 35 | 90 | | 47.6 | 33.4 | 19.3 | 1.43 | 482.4 | 23.2 | |

(suite)

| N° ex. | Fe2O3 (%) | FeO (%) | $Fe^{2+}/Fe$ (Tot) (%) | Co (ppm) | MnO2 (ppm) | TLA4 (%) | TE4 (%) | TUV4 (%) | SE4 | $\lambda_D$ (nm) | P (%) | Rj |
|--------|-----------|---------|------------------------|----------|------------|----------|---------|----------|-----|------------------|-------|-----|
| 48 | 0.86 | 0.27 | 35 | 83 | | 48.2 | 33.0 | 18.4 | 1.46 | 483.1 | 21.9 | |
| 49 | 0.88 | 0.28 | 35 | 90 | | 46.7 | 32.0 | 17.9 | 1.46 | 482.7 | 23.2 | |

**Revendications**

1. Verre coloré sodo-calcique comprenant des constituants principaux formateurs de verre et des agents colorants, **caractérisé en ce qu'**il comprend :

   i) une quantité de MgO, exprimée par rapport au poids total de verre, qui est supérieure à 2%,
   ii) une quantité de $MnO_2$, exprimée par rapport au poids total de verre, qui est inférieure à 1300 parts par million,
   iii) une quantité positive de $Fe_2O_3$, exprimée par rapport au poids total de verre, qui est supérieure à 0,5% et inférieure à 1,1%, la quantité totale de fer étant exprimée sous forme de $Fe_2O_3$,
   iv) une quantité de fer ferreux, exprimée en poids d'atomes de $Fe^{2+}$ par rapport au poids total des atomes de fer présents dans le verre, supérieure à 28% (rapport $Fe^{2+}$/Fe total),
   v) une quantité de Co, exprimée par rapport au poids total de verre, qui est supérieure à 60 parts par million,
   vi) une quantité de $TiO_2$, exprimée par rapport au poids total de verre, inférieure à 0,1% et **en ce qu'**il présente :
   vii) une sélectivité (SE4) supérieure à 1,2,
   viii) une longueur d'onde dominante ($\lambda_D$) inférieure ou égale à 490 nm, et
   ix) une pureté d'excitation supérieure (P) à 10%.

2. Verre coloré selon la revendication 1, **caractérisé en ce qu'**il présente un indice de rendu de la couleur jaune (Rj) > 98,5 - 0,74 x P.

3. Verre coloré selon une des revendications précédentes, **caractérisé en ce qu'**il possède du fer ferreux en une quantité qui, exprimée en poids d'atomes de $Fe^{2+}$ par rapport au poids total des atomes de fer présents dans le verre, est supérieure à 32% (rapport $Fe^{2+}$/Fe total).

4. Verre coloré selon une des revendications précédentes, **caractérisé en ce qu'**il présente une longueur d'onde dominante ($\lambda_D$) inférieure à 489 nm.

5. Verre coloré selon une des revendications précédentes **caractérisé en ce qu'**il présente une pureté d'excitation supérieure à 15%.

6. Verre coloré selon une des revendications précédentes **caractérisé en ce qu'**il présente une sélectivité (SE4) supérieure à 1,4

7. Verre coloré selon la revendication 6, **caractérisé en ce qu'**il présente une sélectivité (SE4) supérieure à 1,5.

8. Verre coloré selon une des revendications précédentes, **caractérisé en ce qu'**il présente une TUV4 inférieure à 30%.

9. Verre coloré selon une des revendications précédentes, **caractérisé en ce qu'**il présente une TLA4 inférieure à 70%.

10. Verre coloré selon la revendication 9, **caractérisé en ce qu'**il présente une TLA4 inférieure à 65%, de préférence inférieure à 60%.

11. Verre coloré selon une des revendications précédentes, **caractérisé en ce qu'**il comprend une quantité de $Fe_2O_3$, exprimée par rapport au poids total de verre, supérieure à 0,6%, de préférence supérieure à 0,7%.

12. Verre coloré selon une des revendications précédentes, **caractérisé en ce qu'**il possède une longueur d'onde dominante ($\lambda_D$) et une pureté d'excitation (P) qui se situent dans un diagramme trichromatique CIE 1931 à l'intérieur d'un triangle dont les sommets sont le point représentant la source d'illuminant C et les points dont les coordonnées ($\lambda_D$, P) sont respectivement (490,19) et (476, 49).

**13.** Verre coloré selon la revendication 12, **caractérisé en ce qu'**il possède une longueur d'onde dominante ($\lambda_D$) et une pureté d'excitation (P) qui se situent dans un diagramme trichromatique CIE 1931 à l'intérieur d'un triangle dont les sommets sont le point représentant la source d'Illuminant C et les points dont les coordonnées ($\lambda_D$, P) sont respectivement (490,19) et (480,38).

**14.** Verre coloré selon une des revendications précédentes, **caractérisé en ce qu'**il comprend les agents colorants suivants, leur quantité étant exprimée en pourcentage par rapport au poids total de verre et la quantité totale de fer étant exprimée sous forme de $Fe_2O_3$ :

| | |
|---|---|
| $Fe_2O_3$ | supérieure ou égale à 0,6 % et inférieure à 1,1 % |
| FeO | de 0,15 à 0,35 % |
| Co | de 0,0060 à 0,0120 % |

**15.** Verre coloré selon la revendication 14, **caractérisé en ce qu'**il présente les propriétés optiques suivantes :

$$35\ \% < TLA4 < 60\ \%$$

$$15\ \% < TE4 < 40\ \%$$

$$TUV4 < 25\ \%$$

$$481\ nm < \lambda_D \leq 490\ nm$$

$$10\% < P < 25\ \%$$

**16.** Verre coloré selon une des revendications 1 à 13, **caractérisé en ce qu'**il comprend les agents colorants suivants, leur quantité étant exprimée en pourcentage par rapport au poids total de verre et la quantité totale de fer étant exprimée sous forme de $Fe_2O_3$ :

| | |
|---|---|
| $Fe_2O_3$ | supérieure ou égale à 0,9 % et inférieure à 1,1 % |
| FeO | de 0,25 à 0,33 % |
| Co | de 0,0060 à 0,0100 % |

**17.** Verre coloré selon une des revendications 1 à 13, **caractérisé en ce qu'**il comprend les agents colorants suivants, leur quantité étant exprimée en pourcentage par rapport au poids total de verre et la quantité totale de fer étant exprimée sous forme de $Fe_2O_3$ :

| | |
|---|---|
| $Fe_2O_3$ | de 0,6 à 0,9 % |
| FeO | de 0,18 à 0,35 % |
| Co | de 0,0080 à 0,0130 % |

**18.** Verre coloré selon une des revendications 16 et 17, **caractérisé en ce qu'**il présente les propriétés optiques suivantes:

$$35\ \% < TLA4 < 55\ \%$$

$$20\ \% < TE4 < 42\ \%$$

$$TUV4 < 30\ \%$$

$$479\ nm < \lambda_D < 488\ nm$$

$$15\% < P < 35\ \%$$

**19.** Verre coloré selon une des revendications précédentes, **caractérisé en ce qu'**il entre dans la composition d'un vitrage automobile.

## Claims

**1.** Coloured soda-lime glass comprising the main glass-forming constituents and colouring agents, **characterised in that** it comprises:

i) a quantity of MgO expressed relative to the total weight of glass which is more than 2%,
ii) a quantity of $MnO_2$ expressed relative to the total weight of glass which is less than 1300 parts per million,
iii) a quantity of $Fe_2O_3$ expressed relative to the total weight of glass which is more than 0,5% and less than 1.1%, the total quantity of iron being expressed in the form of $Fe_2O_3$,
iv) a quantity of ferrous iron expressed in $Fe^{2+}$ atoms weight relative to the total iron atoms weight present in the glass which is more than 28% ($Fe^{2+}$ /total Fe ratio)
v) a quantity of Co expressed relative to the total weight of glass which is more than 60 parts per million,
vi) a quantity of $TiO_2$ expressed relative to the total weight of glass which is less than 0,1%, and **in that** it has
vii) a selectivity (SE4) greater than 1.2,
viii) a dominant wavelength ($\lambda_D$) less than or equal to 490 nm, and
ix) excitation purity (P) greater than 10%.

**2.** Coloured glass according to Claim 1, **characterised in that** it has a rendition index for the colour yellow ($R_j$) of >98.5-0.74 x P.

**3.** Coloured glass according to any one of the preceding claims, **characterised in that** it contains ferrous iron in a quantity, expressed in the weight of atoms of $Fe^{2+}$ relative to the total weight of iron atoms present in the glass, which is greater than 32% ($Fe^{2+}$/total Fe ratio).

**4.** Coloured glass according to any one of the preceding claims,
**characterised in that** it has a dominant wavelength ($\lambda_D$) of less than 489 nm.

**5.** Coloured glass according to any one of the preceding claims, **characterised in that** it has an excitation purity higher than 15%.

**6.** Coloured glass according to any one of the preceding claims, **characterised in that** it has a selectivity (SE4) greater than 1.4.

**7.** Coloured glass according to Claim 6, **characterised in that** it has a selectivity (SE4) greater than 1.5.

**8.** Coloured glass according to any one of the preceding claims, **characterised in that** it has a TUV4 of less than 30%.

9. Coloured glass according to any one of the preceding claims, **characterised in that** it has a TLA4 of less than 70%.

10. Coloured glass according to Claim 11, **characterised in that** it has a TLA4 of less than 65%, preferably less than 60%.

11. Coloured glass according to any one of the preceding claims, **characterised in that** it comprises a quantity of $Fe_2O_3$ expressed relative to the total weight of glass which is more than 0.6%, preferably more than 0.7%.

12. Coloured glass according to any one of the preceding claims,
**characterised in that** it has a dominant wavelength ($\lambda_D$) and excitation purity (P) which, in a 1931 CIE trichromatic diagram, are located inside a triangle, wherein the angles are the point representing illuminant C and the points, of which the coordinates ($\lambda_D$, P) are (490, 19) and (476, 49) respectively.

13. Coloured glass according to Claim 12, **characterised in that** it has a dominant wavelength ($\lambda_D$) and excitation purity (P) which, in a CIE 1931 trichromatic diagram, are located inside a triangle, wherein the angles are the point representing illuminant C and the points, of which the coordinates ($\lambda_D$, P) are (490, 19) and (480, 38) respectively.

14. Coloured glass according to any one of the preceding claims, **characterised in that** it comprises the following colouring agents, the quantity thereof being expressed as a percentage relative to the total weight of the glass and the total quantity of iron being expressed in the form of $Fe_2O_3$:

$Fe_2O_3$    more than or equal to 0.6% and less than 1.1%
FeO       from 0.15 to 0.35%
Co        from 0.0060 to 0.0120%.

15. Coloured glass according to Claim 14, **characterised in that** it has the following optical properties:

$$35\% < TLA4 < 60\%$$

$$15\% < TE4 < 40\%$$

$$TUV4 < 25\%$$

$$481\,nm < \lambda_D \leq 490\,nm$$

$$10\% < P < 25\%.$$

16. Coloured glass according to any one of Claims 1 to 13, **characterised in that** it comprises the following colouring agents, the quantity thereof being expressed as a percentage relative to the total weight of the glass and the total quantity of iron being expressed in the form of $Fe_2O_3$:

$Fe_2O_3$    more than or equal to 0.9% and less than 1.1%
FeO       from 0.25 to 0.33%
Co        from 0.0060 to 0.0100%.

17. Coloured glass according to any one of Claims 1 to 13, **characterised in that** it comprises the following colouring agents, the quantity thereof being expressed as a percentage relative to the total weight of the glass and the total quantity of iron being expressed in the form of $Fe_2O_3$:

$$Fe_2O_3 \quad \text{from 0.6 to 0.9\%}$$
$$FeO \quad \text{from 0.18 to 0.35\%}$$
$$Co \quad \text{from 0.0080 to 0.0130\%.}$$

**18.** Coloured glass according to one of Claims 16 and 17, **characterised in that** it has the following optical properties:

$$35\% < TLA4 < 55\%$$

$$20\% < TE4 < 42\%$$

$$TUV4 < 30\%$$

$$479 \text{ nm} < \lambda_D < 488 \text{ nm}$$

$$15\% < P < 35\%.$$

**19.** Coloured glass according to any one of the preceding claims, **characterised in that** it forms part of the composition of glazing for motor vehicles.

**Patentansprüche**

**1.** Gefärbtes Kalknatronglas, das Hauptbestandteile der Glasbildung und färbende Wirkstoffe umfasst, **dadurch gekennzeichnet, dass** es umfasst:

i) eine Menge an MgO, ausgedrückt im Verhältnis zum Gesamtgewicht des Glases, welche größer als 2 % ist,
ii) eine Menge an $MnO_2$, ausgedrückt im Verhältnis zum Gesamtgewicht des Glases, welche kleiner ist als 1300 Teile pro eine Million.
iii) eine positive Menge an $Fe_2O_2$, ausgedrückt im Verhältnis zum Gesamtgewicht des Glases, welche größer als 0,5 % und kleiner als 1,1 % ist, wobei die Gesamtmenge an Eisen in Form von $Fe_2O_3$ ausgedrückt ist,
iv) eine Menge an Eisen(II)- Eisen, ausgedrückt im Atomgewicht von $Fe^{2+}$ im Verhältnis zum Gesamtgewicht der im Glas vorliegenden Eisenatome, größer als 28 % (Verhältnis $Fe^{2+}$ / Fe gesamt),
v) eine Menge an Co, ausgedrückt im Verhältnis zum Gesamtgewicht des Glases, welche größer als 60 Teile pro eine Million ist,
vi) eine Menge an $TiO_2$, ausgedrückt im Verhältnis zum Gesamtgewicht des Glases, kleiner als 0,1 %.
und dass es aufweist:
vii) eine Trennschärfe (SE4) größer als 1,2,
viii) eine maßgebende Wellenlänge ($\lambda_D$) kleiner als oder gleich 490 nm, und
ix) einen spektralen Farbanteil (P) von größer als 10 %.

**2.** Gefärbtes Glas gemäß Anspruch 1, **dadurch gekennzeichnet, dass** es einen Farbwiedergabeindex der gelben Farbe (Rj) > 98,5 - 0,74 x P aufweist.

**3.** Gefärbtes Glas gemäß einem der vorhergehenden Ansprüche, **dadurch gekennzeichnet, dass** es Eisen(II)- Eisen in einer Menge besitzt, welche, ausgedrückt im Atomgewicht des $Fe^{2+}$ im Verhältnis zum Gesamtgewicht der im Glas vorliegenden Eisenatome, größer als 32 % ist (Verhältnis $Fe^{2+}$ / Fe gesamt).

**4.** Gefärbtes Glas gemäß einem der vorhergehenden Ansprüche, **dadurch gekennzeichnet, dass** es eine maßgebende Wellenlänge ($\lambda_D$) von kleiner als 489 nm aufweist.

**5.** Gefärbtes Glas gemäß einem der vorhergehenden Ansprüche, **dadurch gekennzeichnet, dass** es einen spektralen Farbanteil von größer als 15 % aufweist.

**6.** Gefärbtes Glas gemäß einem der vorhergehenden Ansprüche, **dadurch gekennzeichnet, dass** es eine Trennschärfe (SE4) von größer als 1,4 aufweist.

**7.** Gefärbtes Glas gemäß Anspruch 6, **dadurch gekennzeichnet, dass** es eine Trennschärfe (SE4) von größer als 1,5 aufweist.

**8.** Gefärbtes Glas gemäß einem der vorhergehenden Ansprüche, **dadurch gekennzeichnet, dass** es einen TUV4 von kleiner als 30 % aufweist.

**9.** Gefärbtes Glas gemäß einem der vorhergehenden Ansprüche, **dadurch gekennzeichnet, dass** es einen TLA4 von kleiner als 70 % aufweist.

**10.** Gefärbtes Glas gemäß Anspruch 9, **dadurch gekennzeichnet, dass** es einen TLA4 von kleiner als 65 %, vorzugsweise kleiner als 60 % aufweist.

**11.** Gefärbtes Glas gemäß einem der vorhergehenden Ansprüche, **dadurch gekennzeichnet, dass** es eine Menge an $Fe_2O_2$, ausgedrückt im Verhältnis zum Gesamtgewicht des Glases, von größer als 0,6 %, vorzugsweise größer als 0,7 % umfasst.

**12.** Gefärbtes Glas gemäß einem der vorhergehenden Ansprüche, **dadurch gekennzeichnet, dass** es eine maßgebende Wellenlänge ($\lambda_D$) und einen spektralen Farbanteil (P) besitzt, die sich in einem trichromatischen Diagramm CIE 1931 im Innern eines Dreiecks befinden, dessen Spitzen den die Lichtquelle C repräsentierenden Punkt sowie die Punkte, deren Koordinaten ($\lambda_D$, P) jeweils (490, 19) und (476, 49) sind, darstellen.

**13.** Gefärbtes Glas gemäß Anspruch 12, **dadurch gekennzeichnet, dass** es eine maßgebende Wellenlänge ($\lambda_D$) und einen spektralen Farbanteil (P) besitzt, die sich in einem trichromatischen Diagramm CIE 1931 im Innern eines Dreiecks befinden, dessen Spitzen den die Lichtquelle C repräsentierenden Punkt sowie die Punkte, deren Koordinaten ($\lambda_D$, P) jeweils (490, 19) und (480, 38) sind, darstellen.

**14.** Gefärbtes Glas gemäß einem der vorhergehenden Ansprüche, **dadurch gekennzeichnet, dass** es die folgenden färbenden Wirkstoffe umfasst, ihre Menge ist prozentual im Verhältnis zum Gesamtgewicht des Glases ausgedrückt und die Gesamtmenge an Eisen ist in Form von $Fe_2O_3$ ausgedrückt:

$Fe_2O_3$    höher als oder gleich 0,6 % und kleiner als 1,1 %
FeO    von 0,15 bis 0,35 %
Co    von 0,0060 bis 0,0120 %

**15.** Gefärbtes Glas gemäß Anspruch 14, **dadurch gekennzeichnet, dass** es die folgenden optischen Eigenschaften aufweist:

```
35 % < TLA4 < 60 %

15 % < TE4 < 40 %

TUV4 < 25 %

481 nm < λD ≤ 490 nm
```

13

$$10\ \% < P < 25\ \%$$

**16.** Gefärbtes Glas gemäß einem der Ansprüche 1 bis 13, **dadurch gekennzeichnet, dass** es die folgenden färbenden Wirkstoffe umfasst, ihre Menge ist prozentual im Verhältnis zum Gesamtgewicht des Glases ausgedrückt und das Gesamtgewicht an Eisen ist in Form von $Fe_2O_3$ ausgedrückt:

| | |
|---|---|
| $Fe_2O_3$ | höher als oder gleich 0,9 % und kleiner als 1,1 % |
| FeO | von 0,25 bis 0,33 % |
| Co | von 0,0060 bis 0,0100 % |

**17.** Gefärbtes Glas gemäß einem der Ansprüche 1 bis 13, **dadurch gekennzeichnet, dass** es die folgenden Wirkstoffe umfasst, ihre Menge ist prozentual im Verhältnis zum Gesamtgewicht des Glases ausgedrückt und das Gesamtgewicht an Eisen ist in Form von $Fe_2O_3$ ausgedrückt:

| | |
|---|---|
| $Fe_2O_3$ | von 0,6 bis 0,9 % |
| FeO | von 0,18 bis 0,35 % |
| Co | von 0,0080 bis 0,0130 % |

**18.** Gefärbtes Glas gemäß einem der Ansprüche 16 und 17, **dadurch gekennzeichnet, dass** es die folgenden optischen Eigenschaften aufweist:

$$35\ \% < TLA4 < 55\ \%$$

$$20\ \% < TE4 < 42\ \%$$

$$TUV4 < 30\ \%$$

$$479\ nm < \lambda_D < 488\ nm$$

$$15\ \% < P < 35\ \%$$

**19.** Gefärbtes Glas gemäß einem der vorhergehenden Ansprüche, **dadurch gekennzeichnet, dass** es auf die Zusammensetzung einer Autoverglasung eingeht.